(19) Europäisches Patentamt
European Patent Office
Office européen des brevets

(11) EP 2 634 746 A1

(12) EUROPEAN PATENT APPLICATION
published in accordance with Art. 153(4) EPC

(43) Date of publication:
04.09.2013 Bulletin 2013/36

(51) Int Cl.:
G06Q 50/00 (2012.01)

(21) Application number: 11835913.2

(22) Date of filing: 15.07.2011

(86) International application number:
PCT/JP2011/066206

(87) International publication number:
WO 2012/056772 (03.05.2012 Gazette 2012/18)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 28.10.2010 JP 2010241609

(71) Applicant: Hitachi, Ltd.
Chiyoda-ku
Tokyo 100-8280 (JP)

(72) Inventor: HASEGAWA, Takashi
Chiyoda-ku,
Tokyo 100-8220 (JP)

(74) Representative: Strehl Schübel-Hopf & Partner
Maximilianstrasse 54
80538 München (DE)

(54) MAINTENANCE MANAGEMENT SYSTEM, AND MAINTENANCE MANAGEMENT METHOD

(57) A maintenance management system creating inspection plans for an inspection region wherein, a required cost for an inspection of an inspection object included within each management region from among the combinations of deadlines for the inspection of the inspection object included within each management region, and a required cost for inspection of an inspection object including an inspection object which exceeds the deadline for inspection in combinations of the deadlines of each inspection from among the objects for inspection that are included in an inspection cost for the inspection region is compared and one combination from the combinations of deadlines for inspection is output on the basis of the comparison result.

# FIG. 1

## Description

Claim of Priority

The present application claims priority from Japanese patent application publication filed on October 28, 2010 (Heisei 22), the content of which is hereby incorporated by reference into this application.

Technical Field

The present invention relates to a system that performs program management of preservation of facilities, more specifically to a maintenance management system that outputs a plan for preserving efficiently a large number of facilities that are scattered in a wide range, for example, utility poles in an electric power distribution installation, etc., and a maintenance management method.

Background Art

Being confronted to a problem that while many of process industries and society infrastructures hold facility assets that will deteriorate otherwise being maintained and necessary maintenance costs swell, the cost itself that are used for the maintenance thereof has a limit, there has arisen an interest in an EAM (Enterprise Asset Management) system that supports a work of facility maintenance comprehensively by an IT (information technology) (see Non-patent Document 1). Especially, in order to preserve efficiently a large number of facilities that are scattered in a wide range, it is important to reduce the largest inspection cost.

Patent Literature 1 discloses a method for determining an inspection priority by predicting degradation of facilities as a technology of reducing the inspection cost.

In addition, Patent Literature 2 discloses a method for determining an inspection order of a region using a facility degradation prediction result. Moreover, it also discloses a method for determining an inspection order of preservation assets in a manner of spanning the regions.

Citation List

Patent Literature

Patent Literature 1: Japanese Unexamined Patent Application Publication No. 2010-097392
Patent Literature 2: Japanese Unexamined Patent Application Publication No. 2009-277109

Nonpatent Literature

Nonpatent Literature 1 : EAM study group, "Book whereby you can fully understand foundations and structure of EAM, " pp.26-27, SHUWA SYSTEM CO., LTD, 2009.

Summary of Invention

Technical Problem

The facility degradation prediction method according to Patent Literature 1 can find an inspection precedence for each preservation asset. However, it does not describe a method for finding an actual inspection plan from the determined precedence.

Moreover, in an inspection plan execution management method described in Patent Literature 2, the precedence for each preservation asset can be determined using the inspection precedence of the each asset to be preserved, such as a facility degradation prediction result, and an inspection order can be determined using the result also in the region.

However, since the inspection is performed in such a way that the inspection object with low precedence is done in a later order, an inspection cost is not reduced as compared with a case where the inspection is done without determining the precedence.

Furthermore, since the precedence of the region is set equal to an order of the inspection object whose precedence is the highest in the region, there is a problem that when there is only a small number of objects with high precedence in the region, other inspection objects with low precedence are examined preferentially because of the inspection objects with high precedence, and the inspection of the inspection objects with high precedence in other regions are relatively delayed.

Moreover, Patent Literature 2 discloses a method for determining the inspection order according to the inspection precedence of each preservation asset like a facility degradation prediction result, regardless of the preservation region.

However, in that case, if a distance between the inspection objects whose orders are adjacent to each other is large, the required cost for the inspection will increase as compared with a case where the adjacent inspection objects are inspected without determining the precedence.

This is because the inspection cost includes not only the quantity of the inspection objects but also a time to move between the inspection objects. In the case where only the inspection objects with high precedence are inspected, the time to move between the inspection objects may increase, and the inspection cost may increase. Moreover, the preservation region crosses over a wide region and the number of inspection objects also increases according to it. Therefore, it was difficult to make a suitable determination as to whether the pertinent inspection objects should be inspected at present, or later for each inspection object in order to make low the required cost for the inspection.

As mentioned above, if the inspection object with high precedence is included in a temporal inspection route, a cost of the temporal inspection will increase. However, since a regular inspection whose deadline is an arbitrary period, i.e., whose deadline for inspection is fixed is also performed, the cost will not decrease unless the costs of the temporal inspection and of the regular inspection are considered comprehensively.

Solution to Problem

If a representative example of the invention disclosed in this application, it will be as follows. That is, it is a maintenance management system for creating an inspection plan of the inspection objects in multiple regions that are categorized, which has a database that memorizes deadlines and position information of the inspection objects, a first calculator for calculating a required cost for the inspection of the inspection objects included within the each management region on the basis of the position information, and a second calculator for calculating a required cost for the inspection of the inspection objects that are specific beyond the management region on the basis of the position information, characterized in that among combinations of the deadlines of the inspection of the inspection objects included within the each management region, the inspection cost of the inspection region that includes a cost calculated by the first calculator and a required cost for the inspection of the inspection objects including inspection objects whose deadlines exceed the deadline for inspection in combinations of the deadlines of inspections is compared, and one of the combinations of the deadlines of inspections is output on the basis of a result of the comparison.

Advantageous Effects of Invention

According to a representative embodiment of the present invention, it is possible to present a management that can reduce an overall cost to the inspection objects arranged in multiple regions.

Brief Description of Drawings

Fig. 1 is a diagram showing one example of a system configuration of a maintenance management system.
Fig. 2 is a total flowchart showing one example of a maintenance management method.
Fig. 3 is a diagram showing one example of a data structure of historical data.

Fig. 4 is a diagram showing one example of a data structure of facility status data.
Fig. 5 is a PAD diagram showing one example of an inspection priority calculation method.
Fig. 6 is a PAD diagram showing one example of a maintenance management generation method.
Fig. 7 is a diagram showing one example of a data structure of management data.
Fig. 8 is a figure showing categorized inspection objects.
Fig. 9 is a figure showing the inspection objects with high inspection priorities that are grouped.
Fig. 10 is a PAD diagram showing one example of an inspection cost calculation method.

Description of Embodiments

Hereafter, embodiments of the present invention will be described with reference to drawings.

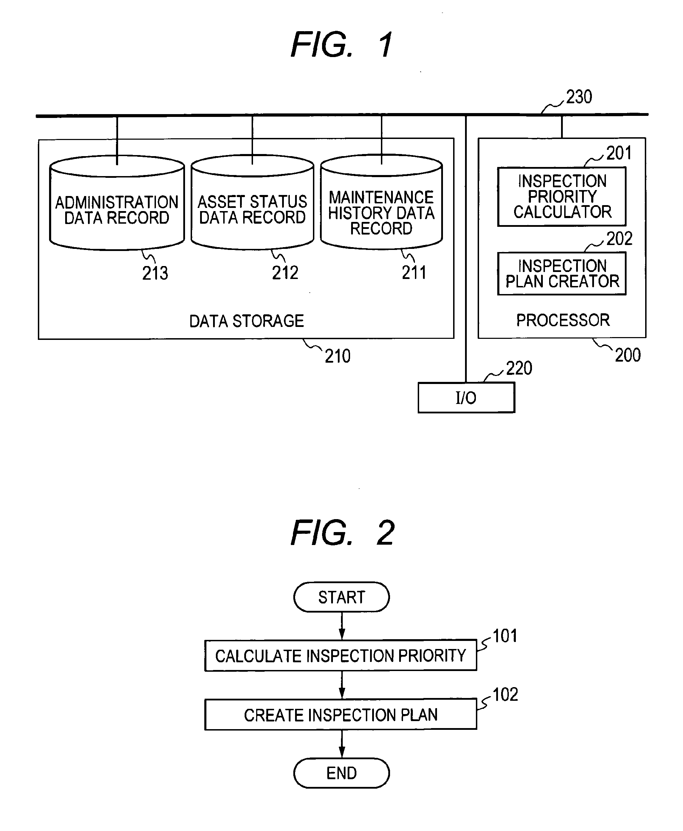

First, a system configuration example of the embodiment of the present invention is shown using Fig. 1. The system of the embodiment of the present invention is a system including a processor (200) for creating an inspection plan and a data storage (210). The data storage (210) has a maintenance history data record (211), an asset status data record (212), and an administration data record (213). Moreover, the processor (200), the data storage (210), and an I/O (220) for performing an entry of data and an output of the inspection plan are connected by a communication route (230).

Each record unit is realized by a storage device such as a magnetic disk device (hard disk drive). Moreover, the communication route (230) may be a network that connects another storage device. In that case, each record unit may be configured to be a device connected to the network.

Here, data recorded in the maintenance history data record (211) is a failure history, a replacement history, a use history, etc. of the inspection object. From these pieces of history of failures that occurred in the past and were recorded in the maintenance history data record (211), an interval of failures and replacements in the future, that is, deadlines of the inspection of the inspection objects can be found. In the case where the inspection object, i.e., the inspection asset is a utility pole of an electric power distribution installation, pieces of data recorded in the maintenance history data record (211) are the failure history of equipment (transformer etc.) installed on the utility pole, a replacement history of parts, accumulated electric energy, etc.

Pieces of data recorded in the asset status data record (212) are installation dates of inspection objects and position information, such as an environment of an installation location, in multiple inspection regions sectioned by the management regions. In the case where the inspection object is the utility pole of the electric power distribution installation, pieces of data recorded in the asset status data record (212) are an installation date of the utility pole and equipment set on the pole and the position information of an environment (seashore, strong wind, damage from salt water, etc.) of the installation location.

Moreover, pieces of data recorded in the administration data record (213) are a degree of effects when a failure occurs, etc. In the case where the inspection object is the utility pole of the electric power distribution installation, data recorded in the administration data record (213) is information of the number of consumers to each of which the electric power is supplied through a distribution line connected the utility pole, a commercial facility that requires higher stability of distribution of electric power compared to general houses, etc.

Next, one example of the embodiment of the present invention will be shown using Fig. 1 and Fig. 2. First, an inspection priority calculator (201) predicts an inspection priority for every inspection object using data recorded in the maintenance history data record (211) and the asset status data record (212), and records it in the asset status data record (212) (101).

Here, the inspection priority is a value showing a possibility of a failure etc. of the inspection object, or a value showing a necessity of the inspection. Although details will be described later, a candidate of the inspection asset in the inspection that is performed if needed (individual inspection) is selected on the basis of the inspection priority.

Next, an inspection plan creator (202) calculates a pair of an optimal individual inspection route and a region inspection interval using the predicted inspection priority and data recorded in the management data storage unit (213), and outputs it to the I/O (220) (102).

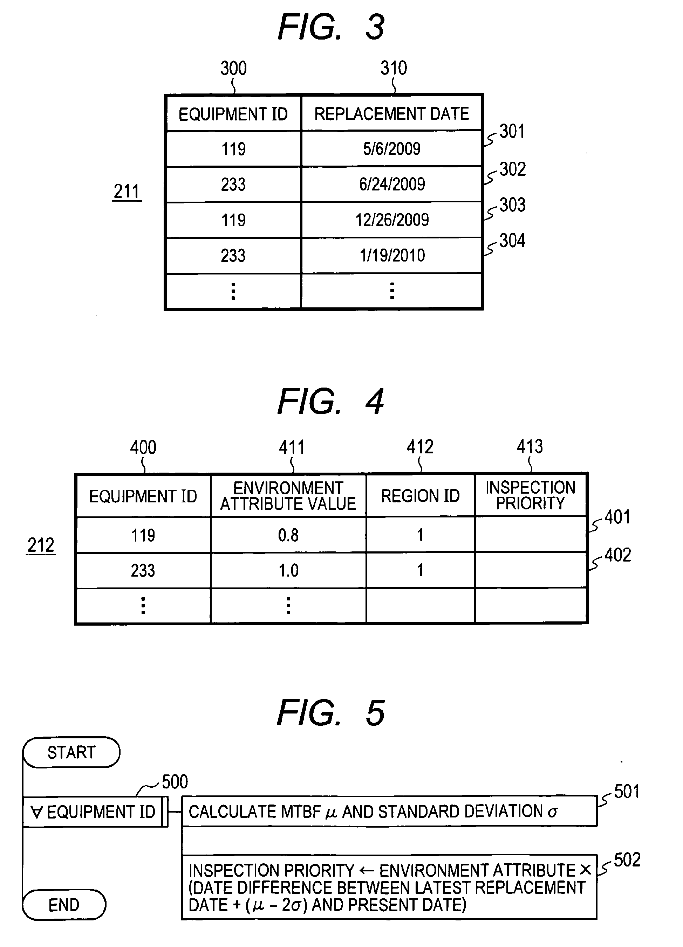

Next, the maintenance history data record (211) and the asset status data record (212) that are used in an inspection priority calculation (101) will be explained using Fig. 3 and Fig. 4. First, as shown in Fig. 3, the maintenance history data record (211) records the failure history that maps an equipment ID of the inspection object (300) and a replacement date (310) due to equipment degradation.

For example, data on the first line represents that the equipment of an equipment ID 119 is replaced on May 6, 2009 due to equipment degradation. In an example shown in Fig. 3, the maintenance history data record (211) is recording points of time when failures occurred in the past in chronological order.

In this embodiment, the asset status data record (212) has recorded a facility status in which an equipment ID (400), an environmental attribute value (411), and a region ID (412) are mapped with one another. The environmental attribute value (411) is a coefficient for the time between failures by an installation environment of the equipment, and is a positive value of 1.0 or less. It indicates that with a decreasing value, the equipment is installed in an environment that easily causes it fail. For example, since equipment of data 402 on the second line is in a usual environment, 1.0 is recorded in the environmental attribute value (411), whereas since equipment of data 401 on the first line is installed in an environment that easily causes it to fail, 0.8 that is a smaller value than 1.0 is recorded in the environmental attribute value (411). The environments where it fails easily than usual is a salt damage region, a strong wind region, a strong electromagnetic field region, etc., for example. The environmental attribute value (411) may be determined on the basis of the past failure history etc., or may be estimated from a state of the equipment installed in a similar environment.

Moreover, an identifier of a region that includes the inspection object is recorded in the region ID (412), and an example shown in Fig. 4 shows that both the equipment of the data 401 on the first line and the equipment of the data 402 on the second line are included in a region of a region ID 1. The inspection priority obtained by the inspection priority calculation (101) is recorded in an inspection priority (413).

Next, the inspection priority calculation processing (101) that the inspection priority calculator (201) performs will be explained using Fig. 5 and Fig. 3. For all the equipment IDs (300, 400) that are recorded in the maintenance history data record (211) and the asset status data record (212), a value obtained by subtracting the time between failures from a latest replacement date is recorded as the inspection priority (413). Furthermore, as shown in Fig. 5, a MTBF (means time between failures) $\mu$ and its standard deviation $\sigma$ may be calculated (501), and a value obtained by multiplying a date difference between a date after $\mu - 2\sigma$ and the present by the environmental attribute may be recorded as the inspection priority (413). Thus, by calculating using the standard deviation, as compared with the case where the value obtained only by reducing the time between failures is recorded as the inspection priority, it is possible to predict occurrence of a failure more exactly and to lower an incidence rate of failure.

Here, the time between failures is a difference of adjacent equipment replacement dates (310) in the equipment of the same equipment ID (300). For example, in the example shown in Fig. 3, for equipment of the equipment ID 119, since the equipment replacement date is recorded as May 6, 2009 (301) and the next equipment replacement date is recorded as December 26, 2009 (303), the time between failures is 234 days that is a difference of them. Moreover, for equipment of the equipment ID 233, since the equipment replacement date is recorded as June 24, 2009 (301) and the next equipment replacement date is recorded as January 19, 2010 (304), the time between failures is 209 days that is a difference of them.

Moreover, the latest replacement date is a latest replacement date in the equipment of the same equipment ID (300), i.e., a maximum value of the equipment replacement date. For example, in the example shown in Fig. 3, December 26, 2009 is the latest replacement date for the equipment of the equipment ID 119 (303), and January 19, 2010 is the latest replacement date for the equipment of the equipment ID 233 (304).

Moreover, when the MTBF of the equipment of the equipment ID 119 is 240 days and its standard deviation is six days, as shown in Fig. 5, using $\mu - 2\sigma$, 240 - $2 \times 6 = 228$ days after the latest replacement date is August 11, 2010, and this date becomes an earliest date of an equipment replacement prediction date. For example, supposing that the present date is April 1, 2010, since a date difference from the present date is 132 days and an environmental attribute (41) in the equipment of the equipment ID (400) 119 is 0.8 (401), the inspection priority becomes $0.8 \times 132 = 105.6$. Incidentally, since the inspection priority represents how much closer a failure is, the equipment having a smaller value has a higher priority.

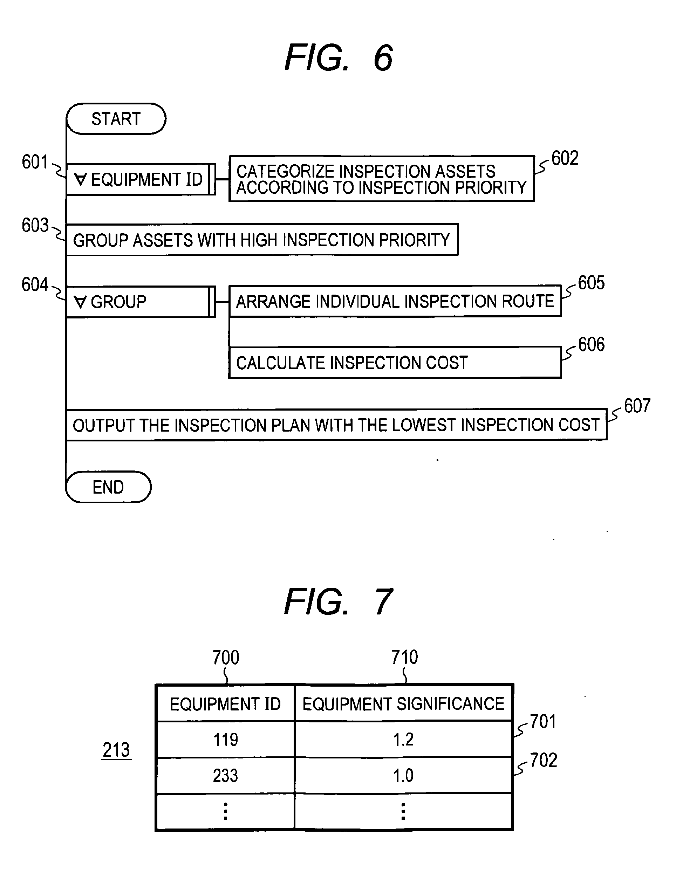

Next, the inspection plan creation processing (102) that the inspection plan creator (202) performs will be explained using Figs. 6 to 9. First, the equipment, i.e., the inspection objects are categorized into a group where the inspection priority is higher than a previously determined threshold and a group where it is lower than the threshold, on the basis of the obtained inspection priority (413) and the management data (213).

Here, the equipment ID (700) and an equipment significance (710) are mapped with each other and recorded in the administration data record (213). The equipment significance (710) represents the significance of a failure of the equipment on an operation. In a normal case, it is 1.0 like data (702), and in the case where the influence is large, a value larger than 1.0 like data (701) is recorded depending on its degree.

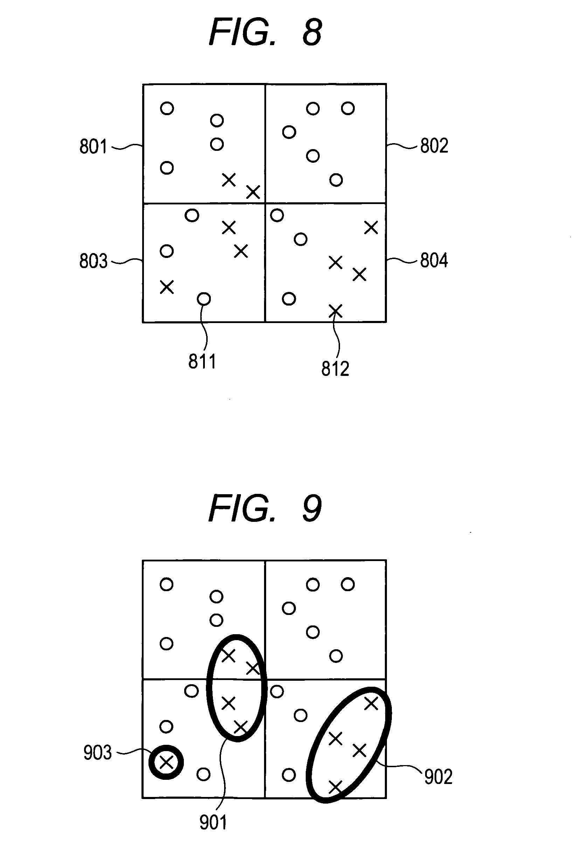

For example, when the inspection object is the utility pole in the electric power distribution installation, if electric power is supplied to many supply destinations via the distribution lines that the utility poles support, the degree of effects of a failure, etc. will become large. A value of the inspection priority (413) obtained using the degree of effects, specifically one that is obtained by a processing (502) and is recorded in the asset status data record (212), is divided by the equipment significance (710). Then, as shown in Fig. 8, when the quotient is larger than the threshold determined in advance, "O" is displayed; when it is smaller than the threshold, "X" is displayed.

In the above-mentioned example, when the threshold is determined as 120, the equipment of the equipment ID 119 has an inspection priority of 105.6, and a quotient 88 is categorized into a group with high inspection priority because it is smaller than the threshold 120.

Incidentally, in this embodiment, the inspection to the inspection region sectioned using the management region is called region inspection. Moreover, inspection other than the region inspection to the inspection object with high inspection priority is called the individual inspection.

Since the inspection region is sectioned by the management region, the region inspection needs a small move time, but it may also examine the inspection objects with low inspection priority. Moreover, although the individual inspection performs the inspection that is limited to the inspection objects with high inspection priority, if the inspection objects with high inspection priority extend to a wide range, the move time will increase.

An example of the inspection objects whose inspection priorities are categorized is shown in Fig. 8. In the diagram, the inspection object is shown by "O" (811) or "X" (812). Here, the "O" (811) represents the inspection object with low inspection priority, and the "X" (812) represents the inspection object with high inspection priority. Moreover, regions (801 to 804) surrounded by respective quadrangles are inspection regions that are sectioned by respective management regions and in each of which the inspection is performed.

Next, groups (901 to 903) corresponding to a nearness of the distance are created from the inspection objects (812) with high inspection priority using a clustering technique, such as a KNN method (603). This grouping uses the position information of each inspection object stored in the data storage (210) in addition to the inspection priority.

Next, the individual inspection route is found for each of combinations (604) of groups that are shown below using a technique, such as a local search algorithm for obtaining a travelling salesman problem and the Simulated Annealing method (605), and the inspection cost, i.e. , an individual inspection cost and a region inspection cost, are calculated (606).

The followings are among the inspection patterns selected in this embodiment. (1) All the regions shall be the inspection regions, not using a group that is generated by the processing (603) (with no individual inspection). (2) Only the group (901) that spans two or more inspection regions among the groups that are generated by the processing (603) shall be subjected to the individual inspection, that is, a specific inspection object shall be subjected to the individual inspection, and the remainder shall be subjected to the region inspection. (3) All the groups (901 to 903) that are generated by the processing (603) shall be subjected to the individual inspection.

Here, the individual inspection route and the inspection cost may be calculated (604, 605) by altering the threshold used in a processing (602) and finding (2) and (3) for respective inspection objects that are categorized as the high priorities with respective thresholds. For example, when three kinds of thresholds are prepared, three kinds of combinations of (2) and (3) are obtained, therefore, the individual inspection route and the inspection cost are calculated for seven kinds of combinations of groups in all (604, 605). Finally, a combination such that the calculated inspection cost becomes a minimum is output as the inspection plan (607). By this, a part of the inspection object whose inspection priority is higher than the threshold will be included in the individual inspection. Since all the combinations of the inspection objects with high inspection priority that are included in the individual inspection are calculated by generating groups in the processing (603) and performing the individual inspection only on the groups that span the inspection regions, it is possible to decrease the number of combinations to be less than a case where all the combinations of the individual inspections of the inspection objects are calculated without grouping them, and therefore to reduce the calculation processing.

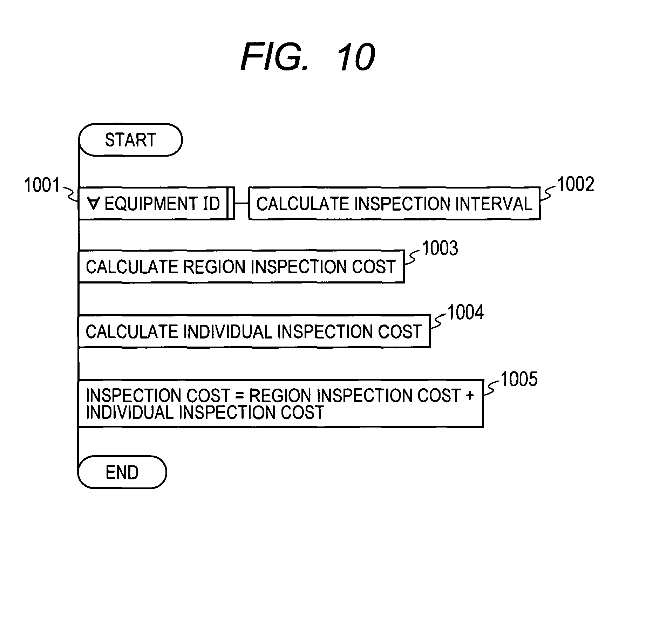

Next, a specific method of inspection cost calculation (606) will be explained using Fig. 10. First, the region inspection interval is calculated (1002) for every region (1001). Here, it is assumed that the region inspection interval, i.e., a deadline for region inspection should be included in a corresponding region ID, and should be a minimum among the priorities of the assets that are not included in the individual inspection.

Next, a region inspection cost (1100) is calculated using Formula (1) (1003). In Formula (1), n is the number of inspection objects that are included in the region ID but not included in the individual inspection, Cr is a man power in the case where all the assets in the inspection region that is categorized by the management region and where the inspection is performed; Nr is the number of assets included in the region ID, and dr is the region inspection interval calculated by the processing (1002). [Formula 1]

$$C_R = \sum_r \frac{n}{N_r} \frac{c_r}{d_r} \quad \cdots \quad (1)$$

Next, an individual inspection cost (1200) is calculated using Formula (2) (1004). In Formula (2), a is an inspection manpower per inspection object, n is the number of inspection objects included in the individual inspection, b is a move manpower per unit length, and Lj is a move distance between the inspection objects. Finally, a sum of the region inspection cost calculated by the processing (1003) and the individual inspection cost calculated by the processing (1004) is an inspection cost (1005).
[Formula 2]

$$C_I = an + b\sum_j L_j \quad \cdots \quad (2)$$

Incidentally, the inspection plan being output in a processing (607) includes the individual inspection route obtained by the processing (605) and the region inspection interval of each region obtained in 1002. Moreover, when a part of the inspection objects that were subjected to the individual inspection is included in the assets of subsequent region inspection, the deadline for region inspection in the region will be shortened by the individual inspection of the other inspection object. For this reason, an overall inspection cost can be reduced.

Industrial Applicability

According the embodiments of the present invention, since the region inspection interval, that is, the deadline for inspection is calculated according to the predicted precedence, it is possible to enlarge the region inspection interval in the inspection region that includes only inspection objects with low precedence, and it is possible to reduce the inspection cost because the number of times of the region inspection per time decreases.

Moreover, according to the embodiment of the present invention, in the case where the inspection objects with high inspection priority exist inconsiderably in the inspection region, it is possible to enlarge the interval of the region inspection of remaining inspection objects in the inspection region by including the inspection object with high priority in a route of the individual inspection. Even if the individual inspection cost increases by having included the inspection object with high priority in the individual inspection, the cost occurring within a fixed period will decrease because the interval of the region inspection will become large. That is, it is recommendable to compare the cost per unit time for comparison of the cost. By this, an overall cost of the individual inspection and the region inspection can be reduced.

As mentioned above, although the present invention was explained in detail with reference to the attached drawings, the present invention is not limited to such a specific configuration, and includes various changes in the gist of what are claimed that are attached and equivalent configurations.

**Claims**

1. A maintenance management system that creates an inspection plan of inspection objects in a plurality of regions that are categorized, comprising:

   a database for storing deadlines for inspections and position information of the inspection objects;
   a first calculator for calculating a required cost for an inspection of the inspection object included within the each management region on the basis of the position information; and
   a second calculator for calculating a required cost for an inspection of the inspection objects that are specific beyond the management region on the basis of the position information;
   wherein the maintenance management system that, among combinations of the deadlines for inspections of the inspection objects included within the each management region, compares the inspection cost of the inspection region that includes a cost calculated by the first calculator and a required cost for an inspection of the inspection objects including an inspection object that exceeds the deadline for inspection in the combinations of the deadlines for inspections within the inspection objects, and
outputs one of the combinations of the deadlines for inspections on the basis of the comparison result.

2. The maintenance management system according to claim 1,
wherein a combination whose cost per unit time is the lowest is output as one among the combinations.

3. The maintenance management system according to claim 1,
wherein the cost calculated by the first calculator and the second calculator is a cost per unit time.

4. The maintenance management system according to claim 1,
comprising a priority calculator that calculates a priority of inspection of the inspection object on the basis of stored information of the database and calculates the deadline for inspection from the calculated priority.

5. The maintenance management system according to claim 4,
wherein the priority calculator calculates the deadline for inspection on the basis of significance when the inspection object fails, failure information by an installation environment of the inspection object, and history information that the inspection object was examined or failed in the past.

6. The maintenance management system according to claim 4,
wherein the deadline for inspection is determined on the basis of the inspection object whose priority is lower than the predetermined threshold and whose priority is also the highest in one inspection region among the plurality of inspection regions.

7. A maintenance management method that creates an inspection plan of inspection objects in a plurality of regions that are categorized, comprising:

a first step of storing deadlines for inspection and position information of the inspection objects;
a second step of calculating a required cost for the inspection of the inspection objects included within the each management region on the basis of the position information;

a third step of calculating a required cost for the inspection of the inspection objects that are specific beyond the management region;
a fourth step of, among combinations of the deadlines for inspections of the inspection objects included within the each management region, comparing an inspection cost of the inspection region that includes a cost calculated in the second step and a cost calculated in the third step required for the inspection of specific inspection objects including an inspection object that exceeds the deadline for inspection in the combinations of the deadlines in the inspection objects; and
a fifth step of outputting one of the combinations of the deadlines for inspections.

8. The maintenance management method according to claim 7, wherein in the seventh step, a combination whose cost per unit time is the lowest is output as one of the combinations.

9. The maintenance management method according to claim 7,
wherein the inspection cost of the inspection region that is compared in the fourth step is a cost per unit time.

# FIG. 1

# FIG. 2

# FIG. 3

| EQUIPMENT ID | REPLACEMENT DATE | |
|---|---|---|
| 119 | 5/6/2009 | 301 |
| 233 | 6/24/2009 | 302 |
| 119 | 12/26/2009 | 303 |
| 233 | 1/19/2010 | 304 |
| ⋮ | ⋮ | |

300   310

211

# FIG. 4

| EQUIPMENT ID | ENVIRONMENT ATTRIBUTE VALUE | REGION ID | INSPECTION PRIORITY | |
|---|---|---|---|---|
| 119 | 0.8 | 1 | | 401 |
| 233 | 1.0 | 1 | | 402 |
| ⋮ | ⋮ | | | |

400   411   412   413

212

# FIG. 5

START

500

∀ EQUIPMENT ID — CALCULATE MTBF $\mu$ AND STANDARD DEVIATION $\sigma$   501

INSPECTION PRIORITY ← ENVIRONMENT ATTRIBUTE × (DATE DIFFERENCE BETWEEN LATEST REPLACEMENT DATE + ($\mu - 2\sigma$) AND PRESENT DATE)   502

END

# FIG. 6

START

601 ∇ EQUIPMENT ID ─── CATEGORIZE INSPECTION ASSETS ACCORDING TO INSPECTION PRIORITY ─602

603 GROUP ASSETS WITH HIGH INSPECTION PRIORITY

604 ∇ GROUP ─── ARRANGE INDIVIDUAL INSPECTION ROUTE ─605

CALCULATE INSPECTION COST ─606

OUTPUT THE INSPECTION PLAN WITH THE LOWEST INSPECTION COST ─607

END

# FIG. 7

213

| | 700 EQUIPMENT ID | 710 EQUIPMENT SIGNIFICANCE | |
|---|---|---|---|
| | 119 | 1.2 | 701 |
| | 233 | 1.0 | 702 |
| | ⋮ | ⋮ | |

# FIG. 8

# FIG. 9

EP 2 634 746 A1

# FIG. 10

START

1001 ∀ EQUIPMENT ID ─ CALCULATE INSPECTION INTERVAL ⌇1002

CALCULATE REGION INSPECTION COST ⌇1003

CALCULATE INDIVIDUAL INSPECTION COST ⌇1004

INSPECTION COST = REGION INSPECTION COST + INDIVIDUAL INSPECTION COST ⌇1005

END

12

## INTERNATIONAL SEARCH REPORT

| | International application No. |
|---|---|
| | PCT/JP2011/066206 |

A. CLASSIFICATION OF SUBJECT MATTER
*G06Q50/00*(2006.01)i

According to International Patent Classification (IPC) or to both national classification and IPC

B. FIELDS SEARCHED

Minimum documentation searched (classification system followed by classification symbols)
G06Q50/00

Documentation searched other than minimum documentation to the extent that such documents are included in the fields searched
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2009-217718 A (Toshiba Corp.), 24 September 2009 (24.09.2009), entire text; fig. 1 to 11 (Family: none) | 1-9 |
| Y | JP 2002-304501 A (Hitachi Engineering Co., Ltd.), 18 October 2002 (18.10.2002), entire text; fig. 1 to 33 (Family: none) | 1-9 |
| Y | JP 2009-169483 A (Hitachi, Ltd.), 30 July 2009 (30.07.2009), entire text; fig. 1 to 16 (Family: none) | 1-9 |

| ☒ Further documents are listed in the continuation of Box C. | ☐ See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 September, 2011 (08.09.11) | 20 September, 2011 (20.09.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

EP 2 634 746 A1

**INTERNATIONAL SEARCH REPORT**

International application No.

PCT/JP2011/066206

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 2010-224660 A (Hitachi, Ltd.), 07 October 2010 (07.10.2010), entire text; fig. 1 to 19 (Family: none) | 4-6 |

Form PCT/ISA/210 (continuation of second sheet) (July 2009)

14

**EP 2 634 746 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010097392 A

- JP 2009277109 A

**Non-patent literature cited in the description**

- **EAM STUDY GROUP.** Book whereby you can fully understand foundations and structure of EAM. SHUWA SYSTEM CO., LTD, 2009, 26-27